# EUROPEAN PATENT APPLICATION

(11) **EP 3 764 420 A1**
(43) Date of publication of application: **13.01.2021**
(21) Application number: 19764153.3
(22) Date of filing: 04.03.2019
(51) Int. Cl.: H01M 2/10, H01M 10/42, H01M 10/44

(54) **ROTATING BATTERY STORAGE STATION, BATTERY CHARGING AND EXCHANGING SYSTEM, BATTERY OPERATION PLATFORM, AND POSITION ADJUSTMENT METHOD**

(30) Priority: 09.03.2018 CN 201810193449
(71) Applicant: NIO (ANHUI) HOLDING CO., LTD, Economic and Technological Development Zone Hefei Anhui 230601 (CN)
(72) Inventor: BENGTSSON, Jan, Hong Kong (CN); LI, Nan, Hong Kong (CN); TIAN, Xiaotao, Hong Kong (CN); DING, Xikun, Hong Kong (CN); MA, Yongyue, Hong Kong (CN); LIU, Jun, Hong Kong (CN)
(74) Representative: Vossius & Partner Patentanwälte Rechtsanwälte mbB
(86) International application number: PCT/CN2019/076834
(87) International publication number: WO 2019/170048

(57) **Abstract**

The invention discloses a rotary battery compartment, a battery charging and swapping system, a battery operation platform and a battery position adjustment method. The rotary battery compartment comprises: a bracket assembly comprising a first bracket and a second bracket, wherein the first bracket is rotatably supported on the second bracket, and the first bracket has one or more lateral portions surrounding a rotation axis of the first bracket, each lateral portion being provided with a battery storage space and capable of rotating to a battery swap position where a battery is capable of being moved into or out of the battery storage space; and a power device configured to provide power to rotate the first bracket about the rotation axis relative to the second bracket. The application of the invention can effectively reduce the equipment investment cost, and enhance the overall space utilization and extensibility of the system, thereby facilitating the implementation of a flexible spatial layout of the system.

## Description

### Technical Field

The invention relates to the technical field of electromechanical equipment, and in particular to a rotary battery compartment, a battery charging and swapping system, a battery operation platform and a battery position adjustment method.

### Background Art

With the progress of science and technology and the development of society, various types of new energy vehicles such as battery electric vehicles and hybrid vehicles are increasingly widely used. With regard to these novel vehicles, technologies involving battery swapping and the like have increasingly become a focus and research topic in this field. For example, the battery power supplement time will be an important indicator, if the user experience of battery charging for vehicles is to overmatch that of the fuelling for traditional vehicles. Battery swapping is a way to achieve quick power supplement. Before breakthrough progress is made in battery technology and available safe quick charging technology occurs, battery swapping will still be the most possible way to achieve that the vehicle battery power supplement time can match or even overmatch that the fuelling time for traditional vehicles. Although a variety of battery swapping devices, equipment or systems have appeared at present, they still have some problems, such as a large space occupied by the whole system, inflexible installation arrangement, high complexity of equipment, difficulty in manufacture and maintenance, high investment costs, high time consumption in battery swapping operation, and limited installation application scope of an operation platform. Therefore, it is quite necessary to carry out adequate studies on the existing problems or defects comprising those mentioned above, so as to make improvements.

### Summary of the Invention

In view of this, the invention provides a rotary battery compartment, a battery charging and swapping system, a battery operation platform and a battery position adjustment method, so as to effectively solve or at least alleviate one or more of the foregoing problems and other problems existing in the prior art.

First, in a first aspect of the invention, a rotary battery compartment is provided, the rotary battery compartment comprising:
a bracket assembly comprising a first bracket and a second bracket, wherein the first bracket is rotatably supported on the second bracket, and the first bracket has one or more lateral portions surrounding a rotation axis of the first bracket, each lateral portion being provided with a battery storage space and capable of rotating to a battery swap position where a battery is capable of being moved into or out of the battery storage space; and a power device configured to provide power to rotate the first bracket about the rotation axis relative to the second bracket.

In the rotary battery compartment according to the invention, optionally, the lateral portions are evenly arranged in a circumferential direction around the rotation axis.

In the rotary battery compartment according to the invention, optionally, each of the lateral portions has one battery storage space, and the battery storage space is configured to have a planar shape parallel to the rotation axis.

In the rotary battery compartment according to the invention, optionally, the first bracket has three lateral portions.

In the rotary battery compartment according to the invention, optionally, the battery swap position is the lowest position of the lateral portion in a circumferential direction around the rotation axis.

In the rotary battery compartment according to the invention, optionally, two or more battery swap positions are provided.

In the rotary battery compartment according to the invention, optionally, the power device is an electric motor configured to enable the first bracket to rotate unidirectionally or bidirectionally about the rotation axis.

In the rotary battery compartment according to the invention, optionally, the first bracket is configured to have an internal cavity, and the power device is arranged in the internal cavity.

In the rotary battery compartment according to the invention, optionally, the rotary battery compartment further comprises a charging device arranged in the internal cavity and configured to charge the battery.

In the rotary battery compartment according to the invention, optionally, the rotary battery compartment further comprises a battery swapping and conveying device configured to convey a used battery removed from a vehicle to the battery swap position and move the used battery into the battery storage space of the lateral portion at the battery swap position, or to move a charged battery out of the battery storage space of the lateral portion at the battery swap position and convey the charged battery for installation on the vehicle.

In the rotary battery compartment according to the invention, optionally, the battery swapping and conveying device is installed on the second bracket, and the battery swapping and conveying device is provided with a conveying component for conveying a battery and a battery swapping component for moving, in the battery swap position, a battery into or out of the battery storage space.

In the rotary battery compartment according to the invention, optionally, the conveying component is a roller, and the battery swapping component moves, in the battery swap position, a battery into or out of a hoister in the battery storage space through a mechanical force and/or a magnetic force.

Second, in a second aspect of the invention, a battery charging and swapping system is provided, the battery charging and swapping system comprising: a parking platform configured to park and position a vehicle thereon;
one or more rotary battery compartments according to any one described above, arranged on one or two sides of the parking platform; and
a battery swapping and conveying device configured to convey to a battery swap position of one of the rotary battery compartments a used battery removed from the vehicle having been parked and positioned on the parking platform and move the used battery into a battery storage space of a lateral portion at the battery swap position, or to move a charged battery out of a battery storage space of a lateral portion at a battery swap position of one of the rotary battery compartments and convey the charged battery to the parking platform for installation on the vehicle.

In the battery charging and swapping system according to the invention, optionally, the battery charging and swapping system is provided with two rotary battery compartments, which are arranged on two opposite sides of the parking platform respectively and configured in such a way that by means of one of the rotary battery compartments, the used battery removed from the vehicle is stored in the battery storage space for charging, and the charged battery is supplied to the vehicle by means of the other rotary battery compartment.

In the battery charging and swapping system according to the invention, optionally, the battery charging and swapping system is provided with at least three rotary battery compartments arranged on two opposite sides of the parking platform respectively, at least two of the rotary battery compartments are arranged on at least one side of the parking platform, and the rotary battery compartments are configured in such a way that by means of one of the rotary battery compartments arranged on one side of the parking platform, the used battery removed from the vehicle is stored in the battery storage space for charging, and the charged battery is supplied to the vehicle by means of one of the rotary battery compartments arranged on the other side of the parking platform.

In addition, the invention further provides another battery charging and swapping system, the battery charging and swapping system comprising:
a parking platform configured to park and position a vehicle thereon such that a used battery is removed from the vehicle and conveyed outwards or a charged battery is installed on the vehicle; and
one or more rotary battery compartments according to any one described above, arranged on one or two sides of the parking platform.

In the battery charging and swapping system according to the invention, optionally, the battery charging and swapping system is provided with two rotary battery compartments, which are arranged on two opposite sides of the parking platform respectively and configured in such a way that by means of one of the rotary battery compartments, the used battery removed from the vehicle is stored in the battery storage space for charging, and the charged battery is supplied to the vehicle by means of the other rotary battery compartment.

In the battery charging and swapping system according to the invention, optionally, the battery charging and swapping system is provided with at least three rotary battery compartments arranged on two opposite sides of the parking platform respectively, at least two of the rotary battery compartments are arranged on at least one side of the parking platform, and the rotary battery compartments are configured in such a way that by means of one of the rotary battery compartments arranged on one side of the parking platform, the used battery removed from the vehicle is stored in the battery storage space for charging, and the charged battery is supplied to the vehicle by means of one of the rotary battery compartments arranged on the other side of the parking platform.

In addition, in a third aspect of the invention, a battery operation platform is further provided, the battery operation platform comprising one or more rotary battery compartments according to any one described above or a battery charging and swapping system according to any one described above.

In addition, in a fourth aspect of the invention, a battery position adjustment method is further provided, wherein a battery is arranged in a battery compartment, and the battery arranged in the battery compartment is switched between a non-battery-swap position and a battery swap position by means of the rotary motion of the battery compartment.

The invention innovatively provides a rotary battery compartment, which not only completely changes vertically stacked battery storage, charging and energy supplement modes generally used in the prior art, but can also remarkably reduce the requirements of vehicle battery swapping operating equipment for the field space, and particularly, a corresponding apparatus can be arranged in a very compact space to complete operations such as charging and swapping of the vehicle battery. The application of the invention can effectively reduce the equipment investment cost, and enhance the overall space utilization and extensibility of the system, thereby facilitating the implementation of a flexible spatial layout of the system.

### Brief Description of the Drawings

The technical solution of the invention will be further described in detail below with reference to accompanying drawings and embodiments. However, it should be understood that these accompanying drawings are designed for the purpose of illustration only and therefore are not intended to limit the scope of the invention. In addition, unless otherwise specified, these accompanying drawings are intended to be merely conceptually illustrative of the structural configurations described herein, and are not necessarily drawn to scale.
Fig. 1 is a schematic structural perspective diagram of an embodiment of a battery charging and swapping system according to the invention.
Fig. 2 is a schematic diagram of parking a vehicle on a parking platform in the embodiment of the battery charging and swapping system shown in Fig. 1 for battery swapping operation.
Fig. 3 is a schematic structural side view of the embodiment of the battery charging and swapping system shown in Fig. 1.

### Detailed Description of Embodiments

First, it should be noted that the structures, compositions, principles, features, advantages, etc. of a rotary battery compartment, a battery charging and swapping system, a battery operation platform and a battery position adjustment method according to the invention are specifically described below by way of example. However, all the descriptions are for illustration only and should not be construed as limiting the invention in any way.

Second, with respect to any single technical feature described or implied in the embodiments described herein, or any single technical feature shown or implied in the drawings, the invention further allows for any combination or deletion of these technical features (or equivalents thereof) to be made, to obtain still other additional embodiments of the invention which may not be directly mentioned herein. Furthermore, for the sake of simplifying the drawings, the same or similar parts and features may only be labelled in one or several places in the same drawing.

In addition, it should be understood that the technical term "vehicle battery" used herein includes, but is not limited to, a battery, a set of batteries, a battery pack, etc. configured to provide power for vehicles, and the technical terms "used battery" and "charged battery" refer to a battery that is removed from a vehicle and needs to be swapped and a battery that needs to be installed on a vehicle, respectively.

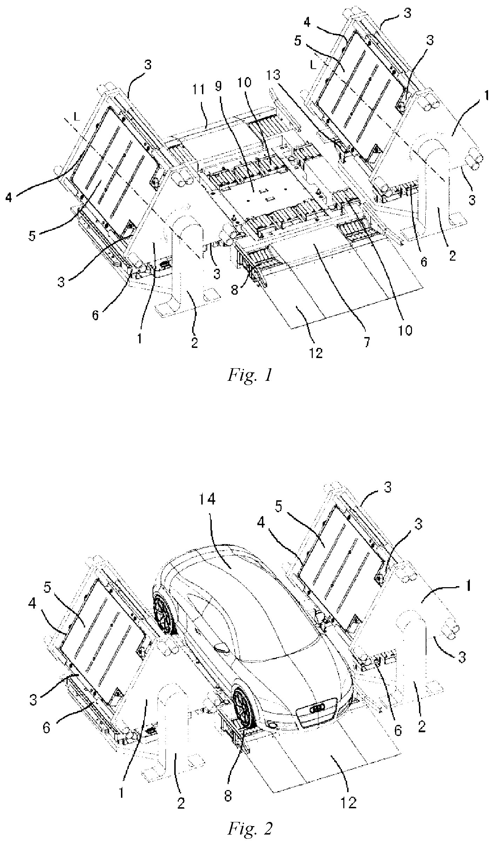

Fig. 1 is a schematic structural perspective diagram of an embodiment of a battery charging and swapping system according to the invention. In the figure, two rotary battery compartment examples according to the invention are exemplarily shown at the same time. The two rotary battery compartment examples are arranged on two sides of the battery charging and swapping system respectively, and have the same structural composition. The basic structural composition of this rotary battery compartment example will be described in detail below.

As shown in Fig. 1, the embodiment of each rotary battery compartment comprises a bracket assembly and a power device. The bracket assembly comprises two portions, namely a first bracket 1 and a second bracket 2. The first bracket 1 is mainly used as a battery storage bracket, while the second bracket 2 is configured to provide support for the first bracket 1. It should be pointed out that a vertical stack mode has been widely used in the field for storing batteries, and such a battery storage and charging rack arrangement mode has long been used by those skilled in the art and has become a standard mode in the industry. However, the invention proposes a battery compartment completely different from the existing battery vertical stack storage mode.

Specifically, in the invention, power is provided by the power device (such as an electric motor), such that the first bracket 1 can rotate about its rotation axis L relative to the second bracket 2. That is, in the technical solution of the invention, the first bracket 1 used as the battery storage bracket is rotatably supported on the second bracket 2, so that batteries do not need to be vertically stacked for storage.

More specifically, in the given embodiment of the rotary battery compartment, a total of three lateral portions 3 are arranged on the first bracket 1 of the bracket assembly, and these lateral portions 3 are uniformly arranged in a circumferential direction around the rotation axis L. That is, contours of the three lateral portions 3 make the longitudinal cross-section of the first bracket 1 basically form an equilateral triangle shape. For example, an internal cavity of the first bracket 1 can be formed by these lateral portions 3, so that components such as the power device can be directly installed in the internal cavity, thereby making full use of the structural space of the rotary battery compartment. This makes the whole device system more compact, so that the battery charging and swapping system designed and provided according to the invention can still be installed when the site space is limited and it is impossible to install a conventional common battery charging and swapping system (for example, a vertically-stacked-type battery storage and charging rack is arranged therein).

In the foregoing rotary battery compartment example, each of the lateral portions 3 is exemplarily provided with only one battery storage space 4 for storing a battery, and the battery storage space 4 is configured to have a planar shape, for example as shown in Fig. 1, and such a plane is parallel to the rotation axis L of the first bracket 1. During the use of the rotary battery compartment, when the power device is activated to drive the first bracket 1 to rotate about the rotation axis L, these lateral portions 3 rotate with this rotary motion, such that the corresponding battery storage space 4 located on each lateral portion 3 and batteries 5 which may have been stored in place can be placed at different positions in the circumferential direction.

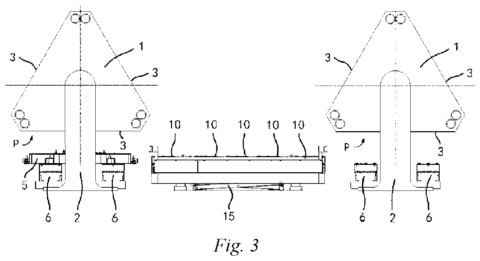

In an optional case, in order to facilitate the battery swapping operation, the lowest position P of the lateral portion 3 in the circumferential direction of rotation about the rotation axis L can be selected as a battery swap position. For example, such a battery swap position is exemplarily illustrated in Fig. 3. That is, when the rotary battery compartment is rotated to this battery swap position, the battery can be moved into the battery storage space 4 of the lateral portion 3 of the first bracket 1 for storage and charging, or the charged battery can be removed from the battery storage space 4 for subsequent installation on the vehicle. It should be understood that in this rotary battery compartment, the battery 5 is moved into the battery storage space 4. That is, the battery 5 is operatively engaged and stored in the battery storage space 4, such that the battery can rotate with the battery storage space 4 without being separated from this battery storage space 4. When the battery 5 has been fully charged and needs to be moved out of the battery storage space 4, the preceding engagement between the battery 5 and the battery storage space 4 can be released. For example, in Fig. 3, it shows that a charged battery 5 is moved out of the battery storage space 4 at the battery swap position.

It can be understood that in the invention, the battery 5 and the battery storage space 4 (and/or other parts on the lateral portion 3) can be respectively correspondingly provided with mechanical structures such as fasteners, concave-convex structures (such as slide grooves and bumps), and bolts and threaded holes that match each other, so as to implement the operable engagement between the battery 5 and the battery storage space 4. Certainly, it may also be allowable in the invention that corresponding magnetic components (such as electromagnetic components) are respectively arranged on the battery 5 and the battery storage space 4 (and/or other parts on the lateral portion 3) separately or in combination, so that the battery 5 can be operatively engaged and stored in the battery storage space 4 by means of the magnetic force generated by these magnetic components. When the battery 5 has been charged and needs to be moved out of the battery storage space 4, the original acting-force engagement between the battery 5 and the battery storage space 4 is removed by applying a corresponding acting force (such as a magnetic force and/or a mechanical force) to the battery 5 or by taking measures such as performing power-off control on, for example, the electromagnetic components.

In addition, as shown by the direction of the double-headed arrow schematically drawn at an end portion of the first bracket 1 in Fig. 1, the following electric motor may be selected as the foregoing power device in the rotary battery compartment of the invention. That is, the electric motor enables the first bracket 1 to rotate bidirectionally about the rotation axis L, so that the rotary motion of the first bracket 1 can be controlled more conveniently and flexibly, and the battery storage space 4 to be operated for battery swapping can reach the battery swap position intelligently, timely and accurately according to the direction of the shortest rotation path, thereby effectively improving the operation efficiency of battery swapping. Certainly, in some applications, the invention also allows the use of an electric motor that enables the first bracket 1 to rotate unidirectionally about the rotation axis L.

It can be understood that, according to the design idea of the invention, in an optional case, a charging device for charging the battery 5 stored in the battery storage space 4 may also be installed in the internal cavity of the rotary battery compartment discussed above, so that the space utilization can be further improved, and the device has a more compact structure and stronger applicability.

Reference is made to Figs. 1 and 3 together, which show that the given example of the rotary battery compartment is further provided with a battery swapping and conveying device 6. The battery swapping and conveying device 6 is exemplarily arranged below the first bracket 1, and more precisely at the battery swap position discussed above, such that the battery swapping and conveying device 6 is configured to convey a used battery removed from a vehicle to this battery swap position and then move the used battery into a battery storage space 4 of a lateral portion 3 having been rotated to this battery swap position; or as shown in Fig. 3, the battery swapping and conveying device is configured to move the charged battery 5 out of the battery storage space 4 at this battery swap position before the charged battery is placed on the battery swapping and conveying device 6, and the battery swapping and conveying device 6 then conveys the battery 5 towards a parking platform 7, so as to transfer the charged battery subsequently via, for example, the conveying device on the parking platform 7 shown in Fig. 1 or 2. The charged battery is then installed on the vehicle to complete the vehicle battery swapping operation.

For illustration, in the example of Fig. 1, the battery swapping and conveying device 6 is arranged on the second bracket 2. This is beneficial to making full use of the existing space, thereby forming a more compact structural spatial layout. In an optional case, the battery swapping and conveying device 6 may be configured to have a conveying component (such as a roller 13) and a battery swapping component (such as a hoister). Such a conveying component is configured to convey the battery 5 such that the battery moves from the outside to the battery swap position or moves outwards from the battery swap position. The battery swapping component is configured to assist, at the battery swap position, in moving the battery 5 into or out of the battery storage space 4 of the lateral portion 3 of the first bracket 1. It can be understood that, with respect to the foregoing battery swapping component such as the hoister, corresponding components for providing a mechanical force and/or a magnetic force as discussed above can be used to assist in moving the battery 5 into the battery storage space 4 or moving the battery 5 out of the battery storage space 4.

Referring to the example of the rotary battery compartment shown in Fig. 1, the general structural composition of the rotary battery compartment according to the invention has been described in detail above, but it should be noted that the invention completely allows various possible flexible designs, changes and adjustments to be made according to actual application conditions without departing from the spirit of the invention.

As an example, in some optional embodiments, the first bracket in the bracket assembly of the rotary battery compartment may be configured in such a way that there are less than three or more than three lateral portions therein. For example, the first bracket may be provided with only one lateral portion having a battery storage space, so that when the space of some installation sites is extremely limited, the space occupied by the rotary battery compartment can be greatly reduced, and the on-site installation layout of the rotary battery compartment can still be completed.

In addition, in some optional embodiments, the invention allows these lateral portions on the first bracket not to be uniformly arranged in the circumferential direction of rotation about the rotation axis of the first bracket, and each lateral portion may have bot less than one battery storage space, so as to meet various practical application requirements. In addition, since various types of new energy vehicles manufactured by different manufacturers may be equipped with many types of batteries and the batteries may have completely different profiles, sizes, etc., the invention completely allows the battery storage space on the lateral portion of the first bracket to be constructed in a structural shape adaptive to these batteries. For example, the battery storage space is no longer a planar shape exemplarily illustrated in Fig. 1.

As another example, in the foregoing discussion, the battery swap position is arranged as the lowest position of the lateral portion in the circumferential direction of rotation about the rotation axis of the first bracket. However, in some optional embodiments, the battery swap position may be alternatively arranged at another suitable position in the circumferential direction according to the specific application requirements, so as to better adapt to the on-site field conditions and other equipment coordination, etc. Furthermore, it should be further pointed out that in a practical application, more than one battery swap position may be provided. That is, according to the design idea of the invention, it may be allowable that two or more different battery swap positions are provided in one rotary battery compartment, so that any one of the battery swap positions can be flexibly selected to move a battery into or out of the rotary battery compartment according to the specific requirements.

For another example, although it is proposed in the invention that components such as the power device and the charging device can be installed in the internal cavity of the first bracket, such an internal cavity is not necessary. It is possible to arrange the power device and/or the charging device outside the first bracket according to the field situation. Furthermore, it can be understood that due to the continuous development of technology, the invention also obviously allows a wireless charging method to be used to charge the battery stored in the battery storage space of the lateral portion of the first bracket, so it may not be necessary to arrange the charging device, etc. directly in the internal cavity of the first bracket.

In addition, in some optional embodiments, it may not be necessary to provide the rotary battery compartment with the foregoing battery swapping and conveying device. That is, such a battery swapping and conveying device can be provided as another separate device, so that the battery swapping and conveying device is not necessary to be included in the rotary battery compartment of the invention as an essential component of the rotary battery compartment.

Reference is made to Figs. 1 and 2 again. The specific composition, working principle, etc. of the battery charging and swapping system designed and provided according to the invention will be explained in detail through the embodiments shown in these accompanying drawings.

In this embodiment, the battery charging and swapping system comprises two rotary battery compartments and a parking platform 7. The two rotary battery compartments are symmetrically arranged on two opposite sides of the parking platform 7 and can be both configured to provide a fully charged battery 5 to a vehicle 14 with a battery to be swapped, and move and store a used battery removed from the vehicle 14 into a battery storage space 4 of a lateral portion 3 of a first bracket 1 for charging.

It should be pointed out that in the practical application, it may be allowable in the invention that only one rotary battery compartment is arranged according to the situation of the working site (for example, the site space is limited). That is, only one rotary battery compartment is arranged on one side of the parking platform 7, and no rotary battery compartment is arranged on the other side of the parking platform 7, so that such a single-sided rotary battery compartment can fully implement the functions of storage, charging and energy supplement of batteries. Certainly, it can be understood that if the site environment permits, it is preferable to arrange one rotary battery compartment on each of two opposite sides of the parking platform 7 as shown in Figs. 1 and 2. In this way, not only the battery storage capacity and the number of charged batteries supplied on the operating site can be increased, but also the rotary battery compartment located on one side can be used to have a used battery removed from the vehicle 14 moved therein for charging, and the rotary battery compartment located on the other side is used to supply a charged battery to the vehicle 14. The operation efficiency of vehicle battery swapping can be improved very effectively by performing the two operations in parallel.

In addition, it should be understood that it may be allowable in the invention that a plurality of rotary battery compartments are provided according to actual application situations without departing from the spirit of the invention. That is, at least one rotary battery compartment may be arranged on one side of the parking platform 7, and two or more rotary battery compartments are arranged on the other opposite side. In this way, the battery storage capacity and the number of charged batteries supplied on the operating site can be further increased, and one of the rotary battery compartments located on one side of the parking platform 7 can be further optionally used to have a used battery removed from the vehicle 14 moved therein for charging, and one of the rotary battery compartments located on the other side of the parking platform 7 is used to supply a charged battery to the vehicle 14. The operation efficiency of vehicle battery swapping can be improved effectively by performing the two operations in parallel. It is not difficult to understand that any suitable conveying components, devices or mechanisms, etc. in the prior art can be used to convey batteries between the rotary battery compartments of the same type located on the parking platform or between a certain rotary battery compartment and the parking platform.

Next, referring to Figs. 2 and 3, after the vehicle 14 enters the parking platform 7 via a ramp 11 and is parked on the parking platform, the vehicle 14 can be positioned via V-shaped positioning grooves 8 on the parking platform 7, so that the vehicle is within a predetermined battery swapping operation position range. Then, a used battery on the vehicle 14 is removed by a battery swapping device 9 and a hoisting device 15 on the parking platform 7, and the used battery is conveyed outwards to one of the foregoing two rotary battery compartments by a conveying device 10 in the form of, for example, a roller. The rotary battery compartment on this side conveys the used battery to a battery swap position by means of a conveying component such as a roller 13 in the battery swapping and conveying device 6 of the rotary battery compartment, and the used battery is then operatively engaged and stored in the battery storage space 4 of the lateral portion 3 of the first bracket 1 of the rotary battery compartment on this side for charging and energy supplement. In addition, the charged battery can be conveyed to the parking platform 7 from the rotary battery compartment located on the other side of the parking platform 7, and the charged battery is then installed on the vehicle 14 by means of the conveying device 10, the battery swapping device 9 and the hoisting device 15, thereby completing the battery swapping operation of the vehicle 14. Then, the vehicle 14 with the charged battery can leave from the parking platform 7 via the ramp 12.

It can be understood that since the technical contents such as the components of the rotary battery compartment and operations of moving a battery into and out of a battery swap position have been described above in great detail, reference may be made directly to the specific description of the foregoing corresponding parts, and unnecessary repetition is omitted here.

It should be further pointed out that, since some rotary battery compartments designed and provided according to the invention do not need to be equipped with the battery swapping and conveying device 6, in the battery charging and swapping system according to the invention, such a battery swapping and conveying device can be provided as a separate component together with the parking platform 7 and the rotary battery compartment.

In view of the fact that the flexibility and technical advantages of the rotary battery compartment and the battery charging and swapping system according to the invention are obviously superior to those of the prior art described above, it is very suitable to provide such a rotary battery compartment or battery charging and swapping system in the battery operation platform, and they cooperate with other devices, equipment or systems (such as a control system) arranged in the battery operation platform to carry out corresponding operations on the vehicle battery. These operations include but are not limited to battery swapping, charging and monitoring of battery information (such as a state of charge, health degree and number of times of use of the battery).

In addition, according to the design idea of the invention, a battery position adjustment method is also provided, which is obviously different from the prior art. In the prior art, for a battery arranged in a battery compartment, the position of the battery is usually adjusted by moving the battery horizontally or vertically. Different from this, according to the embodiment of the battery position adjustment method of the invention, the battery arranged in the battery compartment can reach a battery swap position from a non-battery-swap position or be transferred from the battery swap position to the non-battery-swap position by means of the rotary motion of the battery compartment. That is, the rotary motion method is provided in the invention to complete the switching of the battery between the non-battery-swap position and the battery swap position. In the battery swap position, the battery can be moved into or out of the battery compartment. In addition, other positions that can be reached by the rotary motion of the battery compartment are all non-battery-swap positions. It should be pointed out that in a specific application, there may actually be more than one battery swap position described above. That is, it may be completely allowable in the invention that two or more battery swap positions are provided at the same time for one battery compartment.

As mentioned above, the technical solutions of the invention successfully overcome the drawbacks and shortcomings in the prior art, can especially flexibly and compactly arrange corresponding devices according to the working site conditions to implement rapid battery swapping, can effectively reduce the equipment investment cost, and enhance the space utilization and extensibility of the whole system. This is of great significance for further popularizing new energy vehicles and promoting environmental protection, etc. It should be understood that the vehicle mentioned in the foregoing includes but is not limited to a battery electric vehicle, a hybrid vehicle, and other kinds of new energy vehicles.

The rotary battery compartment, the battery charging and swapping system, the battery operation platform and the battery position adjustment method according to the invention are merely illustrated in detail as above by way of example. These examples are for the purpose of illustrating the principle of the invention and the implementations thereof only, rather than limiting the invention. Those skilled in the art can make various variations and improvements without departing from the spirit and scope of the invention. For example, since the parking platform itself discussed above is not the focus of the invention and the prior art has provided a large number of related technologies in this respect, these existing related technologies are allowed and utilized by the invention to implement corresponding functions of the parking platform in the invention, so that it is unnecessary to explain them one by one herein. Therefore, all equivalent technical solutions should fall within the scope of the invention and be defined by the claims of the invention.

## Claims

1. A rotary battery compartment, **characterized by** comprising:
a bracket assembly comprising a first bracket and a second bracket, wherein the first bracket is rotatably supported on the second bracket, and the first bracket has one or more lateral portions surrounding a rotation axis of the first bracket, each lateral portion being provided with a battery storage space and capable of rotating to a battery swap position where a battery is capable of being moved into or out of the battery storage space; and
a power device configured to provide power to rotate the first bracket about the rotation axis relative to the second bracket.

2. The rotary battery compartment according to claim 1, **characterized in that** the lateral portions are evenly arranged in a circumferential direction around the rotation axis.

3. The rotary battery compartment according to claim 2, **characterized in that** each of the lateral portions has one battery storage space, and the battery storage space is configured to have a planar shape parallel to the rotation axis.

4. The rotary battery compartment according to claim 3, **characterized in that** the first bracket has three lateral portions.

5. The rotary battery compartment according to claim 1, **characterized in that** the battery swap position is the lowest position of the lateral portion in a circumferential direction around the rotation axis.

6. The rotary battery compartment according to claim 1, **characterized in that** two or more battery swap positions are provided.

7. The rotary battery compartment according to claim 1, **characterized in that** the power device is an electric motor configured to enable the first bracket to rotate unidirectionally or bidirectionally about the rotation axis.

8. The rotary battery compartment according to claim 1, **characterized in that** the first bracket is configured to have an internal cavity, and the power device is arranged in the internal cavity.

9. The rotary battery compartment according to claim 8, **characterized by** further comprising a charging device arranged in the internal cavity and configured to charge the battery.

10. The rotary battery compartment according to any one of claims 1 to 9, **characterized by** further comprising a battery swapping and conveying device configured to convey a used battery removed from a vehicle to the battery swap position and move the used battery into the battery storage space of the lateral portion at the battery swap position, or to move a charged battery out of the battery storage space of the lateral portion at the battery swap position and convey the charged battery for installation on the vehicle.

11. The rotary battery compartment according to claim 10, **characterized in that** the battery swapping and conveying device is installed on the second bracket, and the battery swapping and conveying device is provided with a conveying component for conveying a battery and a battery swapping component for moving, in the battery swap position, a battery into or out of the battery storage space.

12. The rotary battery compartment according to claim 11, **characterized in that** the conveying component is a roller, and the battery swapping component moves, in the battery swap position, a battery into or out of a hoister in the battery storage space through a mechanical force and/or a magnetic force.

13. A battery charging and swapping system, **characterized by** comprising:
a parking platform configured to park and position a vehicle thereon;
one or more rotary battery compartments according to any one of claims 1 to 9, arranged on one or two sides of the parking platform; and
a battery swapping and conveying device configured to convey to a battery swap position of one of the rotary battery compartments a used battery removed from the vehicle having been parked and positioned on the parking platform and move the used battery into a battery storage space of a lateral portion at the battery swap position, or to move a charged battery out of a battery storage space of a lateral portion at a battery swap position of one of the rotary battery compartments and convey the charged battery to the parking platform for installation on the vehicle.

14. The battery charging and swapping system according to claim 13, **characterized in that** the battery charging and swapping system is provided with two rotary battery compartments, which are arranged on two opposite sides of the parking platform respectively and configured in such a way that by means of one of the rotary battery compartments, the used battery removed from the vehicle is stored in the battery storage space for charging, and the charged battery is supplied to the vehicle by means of the other rotary battery compartment.

15. The battery charging and swapping system according to claim 13, **characterized in that** the battery charging and swapping system is provided with at least three rotary battery compartments arranged on two opposite sides of the parking platform respectively, at least two of the rotary battery compartments are arranged on at least one side of the parking platform, and the rotary battery compartments are configured in such a way that by means of one of the rotary battery compartments arranged on one side of the parking platform, the used battery removed from the vehicle is stored in the battery storage space for charging, and the charged battery is supplied to the vehicle by means of one of the rotary battery compartments arranged on the other side of the parking platform.

16. A battery charging and swapping system, **characterized by** comprising:
a parking platform configured to park and position a vehicle thereon such that a used battery is removed from the vehicle and conveyed outwards or a charged battery is installed on the vehicle; and
one or more rotary battery compartments according to any one of claims 10 to 12, arranged on one or two sides of the parking platform.

17. The battery charging and swapping system according to claim 16, **characterized in that** the battery charging and swapping system is provided with two rotary battery compartments, which are arranged on two opposite sides of the parking platform respectively and configured in such a way that by means of one of the rotary battery compartments, the used battery removed from the vehicle is stored in the battery storage space for charging, and the charged battery is supplied to the vehicle by means of the other rotary battery compartment.

18. The battery charging and swapping system according to claim 16, **characterized in that** the battery charging and swapping system is provided with at least three rotary battery compartments arranged on two opposite sides of the parking platform respectively, at least two of the rotary battery compartments are arranged on at least one side of the parking platform, and the rotary battery compartments are configured in such a way that by means of one of the rotary battery compartments arranged on one side of the parking platform, the used battery removed from the vehicle is stored in the battery storage space for charging, and the charged battery is supplied to the vehicle by means of one of the rotary battery compartments arranged on the other side of the parking platform.

19. A vehicle battery operation platform, **characterized by** comprising one or more rotary battery compartments according to any one of claims 1 to 12, or a battery charging and swapping system according to any one of claims 13 to 18.

20. A battery position adjustment method, a battery being arranged in a battery compartment, **characterized in that** the battery arranged in the battery compartment is switched between a non-battery-swap position and a battery swap position by means of the rotary motion of the battery compartment.
